(19) Europäisches Patentamt
European Patent Office
Office européen des brevets

(11) **EP 1 760 966 A2**

(12) **EUROPEAN PATENT APPLICATION**

(43) Date of publication:
**07.03.2007 Bulletin 2007/10**

(51) Int Cl.:
**H04L 12/56** *(2006.01)* **H04Q 7/38** *(2006.01)*

(21) Application number: **06018354.8**

(22) Date of filing: **01.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **01.09.2005 KR 20050081470**

(71) Applicants:
• **Samsung Electronics Co., Ltd.**
**Suwon-si, Gyeonggi-Do (KR)**
• **Yonsei University**
**Seoul (KR)**

(72) Inventors:
• **Cho, Han-Gyu**
**Yeongtong-gu**
**Suwon-si**
**Gyeonggi-do (KR)**

• **Cho, Sung-Hyun**
**Yeongtong-gu**
**Suwon-si**
**Gyeonggi-do (KR)**
• **Yun, Sang-Boh**
**Yeongtong-gu**
**Suwon-si**
**Gyeonggi-do (KR)**
• **Cho, Myeon-Gyun**
**Yeongtong-gu**
**Suwon-si**
**Gyeonggi-do (KR)**
• **Hong, Dae-Sik**
**Yeongtong-gu**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for allocating resources in a mobile communication system**

(57) A method is provided for allocating resources in a base station (BS) of a mobile communication system. The method includes calculating a priority value of each sub-carrier for each mobile station (MS) according to a data rate required by each MS and an average channel gain for each MS, the priority value based on an average channel gain between MSs; and allocating the sub-carriers to a MS according to the priority value calculated for each sub-carrier for each MS.

FIG.3

EP 1 760 966 A2

**Description**

**BACKGROUND OF THE INVENTION**

1. Field of the Invention

The present invention relates generally to an apparatus and method for allocating resources in a mobile communication system, and in particular, to an apparatus and method for allocating sub-carriers for each mobile station.

2. Description of the Related Art

The development and diversification of the social structure has caused an explosive increase in the demand for mobile communication service. However, the frequency resources available in the mobile communication system are limited. In order to solve this problem, there is provided a resource allocation scheme for efficiently utilizing the frequency resources.

Commonly, in the mobile communication system, resource allocation is managed by a base station (BS). A mobile station (MS) transmits/receives data using the resources allocated by the BS. For optimized resource allocation, the BS takes into account the current channel state, a frequency reuse factor, a requirement of each MS, etc. The factors determining the channel state include path loss, real-time or non-real time traffic, channel characteristic of each MS, etc. The pass loss differs for each MS according to distance from the BS. The requirement of each MS includes data rate, bit error rate (BER), etc. The mobile communication system aims at minimizing the total transmission power within the range satisfying the requirement of each MS, in the resource allocation process.

A channel allocation scheme in the mobile communication system is divided into a Fixed Channel Assignment (FCA) scheme and a Dynamic Channel Assignment (DCA) scheme.

The FCA scheme is most popularly used in the current mobile communication system, because its control is simple as a channel used by each BS is fixed. The DCA scheme, a scheme of efficiently using limited channels in terms of time and space, improves the frequency resource efficiency thereby contributing to an increase in the capacity.

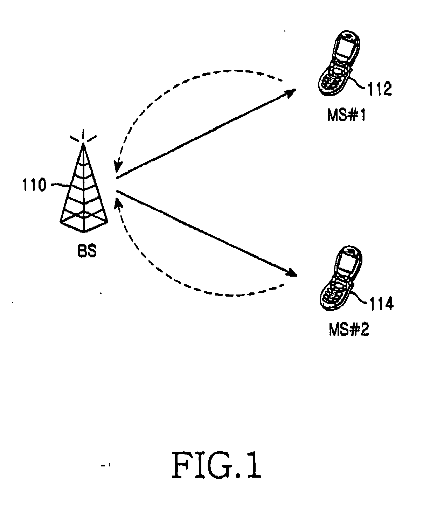

FIG. 1 is a diagram illustrating a communication procedure in a general mobile communication system. FIG. 1 illustrates a downlink communication procedure in a general mobile communication system.

Referring to FIG. 1, a BS 110 transmits data using the resources separately allocated to the MSs, i.e. a first MS 112 and a second MS 114. The MSs 112 and 114 receive the data transmitted by the BS 110, and estimate their current channel states. The MSs 112 and 114 report back to the BS 110 information on the estimated current channel states as feedback information. The BS 110 performs resource allocation for the MSs 112 and 114 based on the feedback information reported from the MSs 112 and 114.

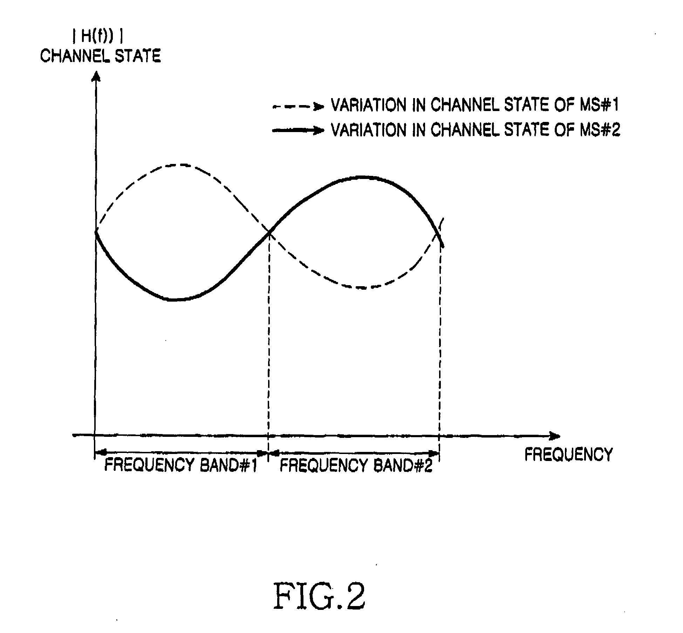

FIG. 2 is a diagram illustrating a resource allocation operation in an Orthogonal Frequency Division Multiple Access (OFDMA) mobile communication system.

Referring to FIG. 2, a first MS has a channel state variation characteristic having a better channel state in a first frequency band rather than in a second frequency band. For convenience, it will be assumed herein that the channel state is, for example, a channel gain. "Channel state" and "channel gain" are used interchangeably herein. In FIG. 2, $|H(f)|$ indicates a channel gain at a frequency $f$. A second MS has a channel state variation characteristic having a better channel state in the second frequency band rather than in the first frequency band. That is, the first MS has a better channel state in the first frequency band, and the second MS has a better channel state in the second frequency band. The channel state for the corresponding frequency band can be acquired based on an analysis of the feedback information received from the first MS and the second MS.

Allocating the frequency band having the better channel state for each MS can be considered as optimal resource allocation. It is preferable to allocate the first frequency band for the first MS, and allocate the second frequency band for the second MS.

A basic principle of the foregoing conventional resource allocation scheme is to calculate a priority value depending on a cost function, and perform resource allocation according to the priority value. The cost function aims at minimizing the total transmission power. The resource allocation is divided into initial allocation and reallocation.

The cost function can be represented by Equation (1)

.

$$c(k,n) = |H(k,n)|R_k \Big/ \sum_{n=0}^{N-1} |H(k,n)| \qquad \ldots\ldots\ldots\ldots (1)$$

In Equation (1), $k$ denotes an index of an MS, $n$ denotes an index of a sub-carrier, $c(k,n)$ denotes a priority value for an $n^{th}$ sub-carrier of a $k^{th}$ MS, $|H(k,n)|$ denotes a channel gain at the $n^{th}$ sub-carner of the $k^{th}$ MS, and $R_k$ denotes a data rate required by the $k^{th}$ MS.

As shown in Equation (1), the existing cost function is based on a 2-dimensional calculation performed by taking into account all MSs $k$ and all sub-carriers $n$.

Two conventional resource allocation schemes using the cost function are a Rate-craving Greedy (RCG) algorithm and a Wong's algorithm.

In the RCG algorithm, during initial allocation, corresponding sub-carriers are allocated to the MS having the best channel state. During reallocation, additional sub-carriers are allocated to the MS that was under allocated sub-carriers from the MS that was over allocated sub-carriers. The priority value based on the cost function can be considered when a channel state of an MS is detected during initial allocation, or considered during relocation.

The Wong's algorithm calculates a cost function-based priority value for each MS during initial allocation, and allocates sub-carriers for individual MSs depending on the priority value on one-by-one basis. If a particular sub-carrier has already been allocated to another MS, the second best sub-carrier is allocated to the corresponding MS. During reallocation, iterative exchange is performed to obtain an additional power gain.

Regarding only the channel state-related parameter except for the data rate, the foregoing existing cost function represents a normalized channel type. Therefore, the cost function has a basic principle of assigning a priority to the sub-carrier having a better channel state as compared with the average channel state. However, if channel allocation is performed based on the existing cost function, there is a possible contradiction that the MS having a poor average channel state and the MS having the good channel state are assigned the same resource allocation opportunity, i.e. the same channel allocation opportunity.

Table 1 shows an example where MSs have the same priority value even though they have different channel gains for each sub-carrier.

Table 1

|  | $|H(k,1)|$ | $|H(k,2)|$ | $c(k,1)$ | $c(k,2)$ |
|---|---|---|---|---|
| First MS | 9 | 1 | 9/10 | 1/10 |
| Second MS | 0.9 | 0.1 | 0.9/1 | 0.1/1 |

This contradiction occurs because the existing cost function is a single MS-based cost function that takes only a single MS into account. That is, the existing cost function does not take a relative channel gain difference into account. Therefore, allowing the MS located in the cell boundary and the MS neighboring to the BS to have the same resource allocation opportunity may cause a loss in terms of the power utilization.

The existing cost function has the high calculation complexity because it is based on the 2-dimensional calculation. In addition, the existing cost function increases in the calculation complexity as it needs iterative resource reallocation aside from the initial allocation.

**SUMMARY OF THE INVENTION**

It is, therefore, an aspect of the present invention to provide an apparatus and method for allocating resources taking into account relative channel gain characteristics between MSs in a mobile communication system.

It is another aspect of the present invention to provide a resource allocation apparatus and method for preferentially allocating resources to an MS having a low average channel gain over all the sub-carriers.

It is further another aspect of the present invention to provide a resource allocation apparatus and method for preferentially allocating resources to an MS located in a cell boundary, and allocating the remaining resources to an MS neighboring a BS.

It is yet another aspect of the present invention to provide an apparatus and method for allocating resources based on a cost function that takes into account a data rate required for each MS and an average channel gain.

It is still another aspect of the present invention to provide a resource allocation apparatus and method for assigning a priority to each MS, and allocating resources depending on the priority assigned to the MS.

It is still another aspect of the present invention to provide a resource allocation apparatus and method for proposing a scheme for distinguishing priority of each MS to determine resource allocation priority, and allocating resources according to the proposed scheme.

It is still another aspect of the present invention to provide a resource allocation apparatus and method for classifying MSs into a plurality of sub classes depending on a priority value assigned to each MS, and performing resource allocation for the each sub-class.

Accordingly, there is provided a method for allocating resources in a base station (BS) of a mobile communication system. The method includes calculating a priority value of each sub-carrier for each mobile station (MS) according to a data rate required by each MS and an average channel gain for each MS, the priority value based on an average channel gain between MSs; and allocating the sub-carriers to a corresponding MS according to the priority value calculated for each sub-carrier for each MS.

According to another aspect of the present invention, there is provided a method for allocating resources in a base station (BS) of a mobile communication system. The method includes calculating, for each mobile station (MS), an MS priority value according to a data rate required by each MS and a channel gain for each MS; ordering the MSs according to the MS priority value; and allocating sub-carriers for each MS according to the ordering result.

According to further another aspect of the present invention, there is provided an apparatus for allocating resources in a base station (BS) of a mobile communication system. The apparatus includes a sub-carrier allocator for calculating a priority value of each sub-carrier for each mobile station (MS) according to a data rate required by each MS and an average channel gain for each MS, the priority value based on an average channel gain between MSs, and allocating the sub-carriers to a MS according to the priority value calculated for each sub-carrier for each MS.

According to yet another aspect of the present invention, there is provided an apparatus for allocating resources in a base station (BS) of a mobile communication system. The apparatus includes a sub-carrier allocator for calculating, for each mobile station (MS), an MS priority value for each MS according to a data rate required by each MS and a channel gain for each MS, ordering the MSs according to the MS priority value, and allocating sub-carriers for each MS according to the ordering result.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a communication procedure in a general mobile communication system;
FIG. 2 is a diagram illustrating a resource allocation operation in an OFDMA mobile communication system;
FIG. 3 is a diagram illustrating an internal structure of a resource allocation apparatus in a mobile communication system according to the present invention;
FIG. 4 is a flowchart illustrating a resource allocation process according to the present invention;
FIG. 5 is a flowchart illustrating a resource allocation process according to the present invention;
FIGs. 6A to 6C are diagrams illustrating simulation result data obtained through performance analysis according to the number of sub-classes; and
FIG. 7 is a diagram illustrating a correlation between the number of sub-classes and the complexity.

## DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for clarity and conciseness.

A description of the present invention will first describe allocating resources taking into account a relative channel gain difference between mobile stations (MSs), and of the describe allocating resources taking into account priority of each MS. Herein, the channel gain is an exemplary parameter representing a channel state, and it should be noted herein that the channel state and the channel gain are used interchangeably.

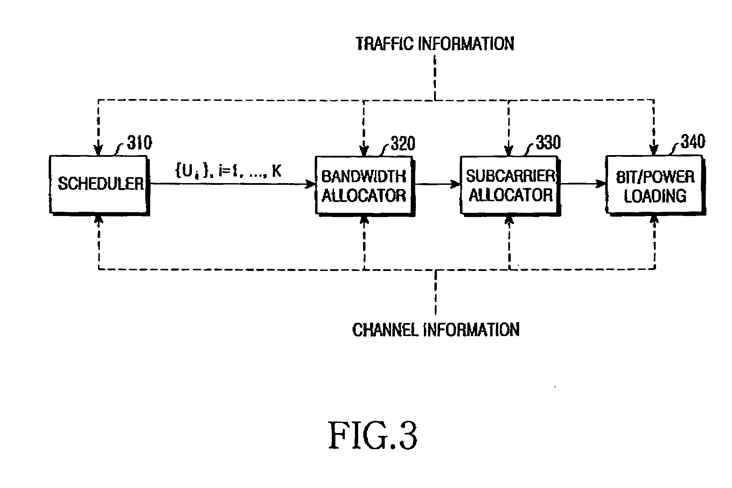

FIG. 3 is a diagram illustrating an internal structure of a resource allocation apparatus in a mobile communication system according to the present invention. Referring to FIG. 3, the resource allocation apparatus includes a scheduler 310, a bandwidth allocator 320, a sub-carrier allocator 330, and a bit/power loading unit 340. The scheduler 310 receives per-MS traffic information (bit error rate (BER), RATE, buffer, etc.) and channel information, and determines a set of MSs scheduled to use a corresponding frame depending on the received information. Herein, the buffer represents amount of data buffered, and the RATE represents data rate required by an MS. The scheduler 310 determines, as the MS set, MSs having the channel state where a frame can be used. The bandwidth allocator 320 receives the per-MS traffic information and the channel information, and allocates a frequency bandwidth to be allocated for the MS set determined by the scheduler 310 depending on the received information. The sub-carrier allocator 330 designates MSs scheduled to use all the sub-carriers. That is, the sub-carrier allocator 330 allocates resources, i.e. sub-carriers, for each MS. The resource allocation method proposed by the present invention is performed in the sub-carrier allocator 330. The bit/power loading unit 340 loads bits and power for each MS depending on the resources allocated by the sub-carrier allocator 330.

Exemplary embodiments of the resource allocation method performed by the resource allocation apparatus and proposed by the present invention will now be described in detail hereinbelow.

First Embodiment

Commonly, in the cellular mobile communication system, a channel gain of an MS neighboring a BS is superior to a channel gain of an MS located in the cell boundary. As a result, the MS located in the cell boundary is inferior to the MS neighboring the BS in terms of an average channel gain over all the sub-carriers. In the cellular mobile communication system, most power consumption is made by the MSs located in the cell boundary. Therefore, the first embodiment of the present invention will propose a resource allocation method that takes into account the power consumption made by the MSs located in the cell boundary.

The first embodiment of the present invention proposes a cost function provided for preferentially allocating resources to the MS located in the cell boundary in the resource allocation process. The cost function proposed by the first embodiment of the present invention can be expressed as shown in Equation (2)

$$c(k,n) = |H(k,n)|R_k / \{\sum_{n=0}^{N-1}|H(k,n)|\}^2 \qquad \ldots\ldots\ldots (2)$$

In Equation (2), $k$ denotes an index of an MS, $n$ denotes an index of a sub-carrier, $c(k,n)$ denotes a priority value for an $n^{th}$ sub-carrier of a $k^{th}$ MS, $|H(k,n)|$ denotes a channel gain at the $n^{th}$ sub-carrier of the $k^{th}$ MS, and $R_k$ denotes a data rate required by the $k^{th}$ MS. The cost function of Equation (2) takes not only a data rate into account but also an average channel gain to reflect a channel gain difference between MSs. That is, the cost function shown in Equation (2) is obtained by multiplying a denominator of the existing cost function, i.e. the cost function shown in Equation (1), by a sum of channel gains over all the frequency bands. A physical meaning of this can be easily understood by separately expressing two parameters of Equation (3) and Equation (4) below.

$$R_k / \sum_{n=0}^{N-1}|H(k,n)| \qquad \ldots\ldots\ldots (3)$$

$$|H(k,n)| / \sum_{n=0}^{N-1}|H(k,n)| \qquad \ldots\ldots\ldots (4)$$

Equation (3) can determine a priority of each MS by calculating a sum of a data rate required for each MS and a channel gain over all the sub-carriers. Equation (4) can determine a priority of each MS for all the sub-carriers, by calculating a sum of channel gains over all the sub-carriers. Therefore, the cost function proposed by the first embodiment of the present invention is expressed as a product of Equation (3) and Equation (4).

It can be clearly understood from Table 2 below that the first embodiment of the present invention additionally takes an average channel gain into consideration.

Table 2

|  | $|H(k,1)|$ | $|H(k,1)|$ | $c(k,1)$ | $c(k,2)$ |
|---|---|---|---|---|
| First MS | 9 | 1 | 9/100 | 1/100 |
| Second MS | 0.9 | 0.1 | 0.9/1 | 0.1/1 |

When the condition in Table 2 is applied to the existing cost function in the same way, the first MS and the second MS have the same priority. However, if the cost function proposed by the first embodiment of the present invention is applied, the second MS has a higher priority than that of the first MS. Therefore, according to the first embodiment of the present invention, the MS located in the cell boundary has a higher priority during resource allocation.

Table 3 below shows a performance difference between the existing cost function and the proposed cost function in the same condition. As to the condition used in Table 3, it is assumed that each of two MSs (K=2) desires to be allocated one sub-carrier (n=2). It addition, it is assumed that the required received power $P_{req}$ is equal for each MS. That is, it is assumed that the two MS have required the same data rate. Finally, it is assumed that a channel gain of

each MS is $\begin{bmatrix} |H(1,1)| & |H(1,2)| \\ |H(2,1)| & |H(2,2)| \end{bmatrix} = \begin{bmatrix} 9 & 1 \\ 0.8 & 0.2 \end{bmatrix}$.

Table 3

|  | $c(k, n)$ | Resource allocation | Required transmission power |
|---|---|---|---|
| Existing Scheme | $\begin{bmatrix} 0.9R & 0.1R \\ 0.8R & 0.2R \end{bmatrix}$ | $\begin{bmatrix} 1 & 0 \\ 0 & 1 \end{bmatrix}$ | $\dfrac{p_{req}}{|9|^2} + \dfrac{p_{req}}{|0.2|^2} \approx 25 P_{req}$ |
| Proposed Scheme | $\begin{bmatrix} 0.09R & 0.01R \\ 0.8R & 0.2R \end{bmatrix}$ | $\begin{bmatrix} 1 & 0 \\ 0 & 1 \end{bmatrix}$ | $\dfrac{p_{req}}{|1|^2} + \dfrac{p_{req}}{|0.8|^2} \approx 2.56 P_{req}$ |

Referring to Table 3, when the existing cost function is applied, a first sub-carrier is allocated to a first MS, and a second sub-carrier is allocated to a second MS. In this case, the required transmission power is $25P_{req}$. However, if the proposed cost function is applied, the second sub-carrier is allocated to the first MS, and the first sub-carrier is allocated to the second MS. In this case, the required transmission power is $2.56P_{req}$. Therefore, under the foregoing assumption, if $P_{req}$ is 10dB, the proposed cost function can obtain a power gain of 10dB, compared with the existing cost function.

The cost function proposed in the first embodiment of the present invention can be modified in various forms. An exemplary modification thereof can be given as shown in Equation (5)

$$c(k,n) = |H(k,n)|R_k / \sum_{n=0}^{N-1} |H(k,n)|^2 \qquad \dots \dots \dots (5)$$

In Equation (5), the cost function is implemented in the form of totaling a square of a channel gain for each sub-carrier. Even though the cost function is implemented as shown in Equation (5), it is possible to equally obtain the effect desired in the first embodiment of the present invention.

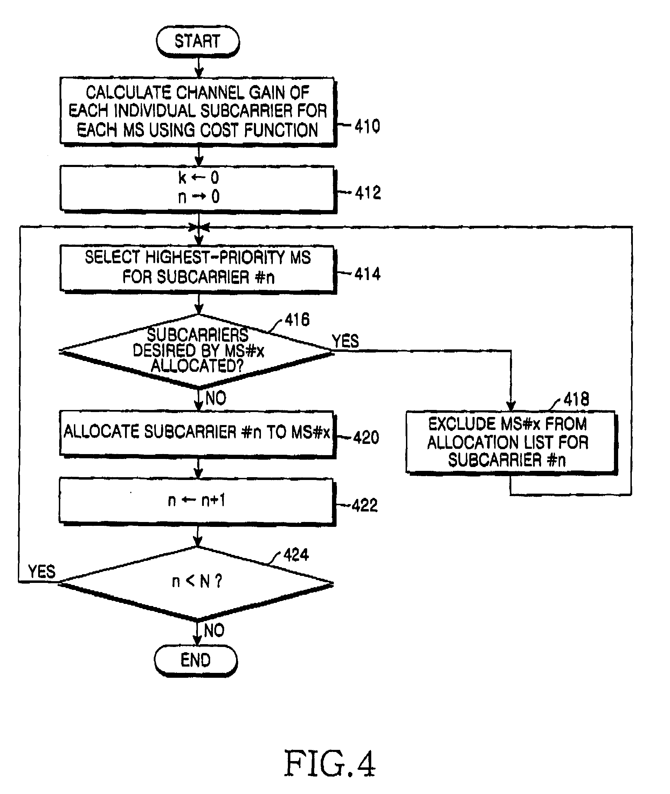

FIG. 4 is a flowchart illustrating a resource allocation process according to the first embodiment of the present invention. It is assumed that the resource allocation process shown in FIG. 4 is performed after a BS completes collection of required data rate information from each MS.

Referring to FIG. 4, in step 410, a BS calculates a channel gain of each sub-carrier for each MS using a cost function. After calculating the channel gain of each sub-carrier for each MS, the BS proceeds to step 412.

In step 412, the BS initializes an index $k$ used for identifying an MS, and an index $n$ used for identifying a sub-carrier. That is, the BS sets the indexes $k$ and $n$ to '0'. Thereafter, in step 414, the BS selects the highest-priority MS, i.e. an MS having the highest priority value, for an $n^{th}$ sub-carrier. It will be assumed herein that the highest-priority MS for the $n^{th}$ sub-carrier is an $x^{th}$ MS. The priority value is calculated using Equation (2) or Equation (5).

In step 416, the BS determines whether as many sub-carriers as the sub-carriers desired by the $x^{th}$ MS have already been allocated. If it is determined that as many sub-carriers as the sub-carriers desired by the $x^{th}$ MS have already been allocated, the BS excludes the $x^{th}$ MS from an allocation list for the $n^{th}$ sub-carrier in step 418, and then returns to step 414. However, if it is determined in step 416 that as many sub-carriers as the sub-carriers desired by the $x^{th}$ MS have not yet been allocated, the BS allocates the $n^{th}$ sub-carrier to the $x^{th}$ MS in step 420. Thereafter, in step 422, the BS increases the index $n$ by 1 to select the next sub-carrier. In step 424, the BS determines whether a value of the index $n$ is less than N, where N denotes the total number of sub-carriers. If it is determined that the value of the index $n$ is less than N, the BS returns to step 414. However, if it is determined in step 424 that the value of the index $n$

is not less than N (n ≥ N), the BS ends the resource allocation process.

As described above, the first embodiment of the present invention allocates resources taking into account a relative channel gain difference between MSs, thereby contributing to optimized resource allocation and minimized transmission power consumption.

Second Embodiment

A second embodiment of the present invention is based on the fact that a low-pass loss MS generally has a low priority in the allocation process for most channels. Herein, the low-pass loss MS can be an MS located in the vicinity of a BS. Therefore, the second embodiment of the present invention preferentially allocates resources to MSs except for the low-pass loss MS, and then allocates the remaining resources to the low-pass loss MS.

To this end, there is a need to propose a scheme for distinguishing an MS to which resources should be preferentially allocated, and another MS to which resources should not necessarily be allocated preferentially. For that purpose, the second embodiment of the present invention prepares a scheme for calculating an MS priority value used for distinguishing a priority for each MS. In addition, the second embodiment designates at least one priority threshold, and preferentially allocates resources to the MS satisfying the priority threshold.

In the second embodiment of the present invention, an MS priority value of each MS can be calculated by Equation (6)

$$r(k) = R_k / \sum_{n=0}^{N-1} |H(k,n)| \qquad \dots\dots\dots (6)$$

In Equation (6), $r(k)$ denotes an MS priority value assigned to a $k^{th}$ MS. The MS priority value calculated by Equation (6) takes into account the data rate required by each MS and the average channel gain. The second embodiment can noticeably reduce the complexity by using 1-dimensional calculation expressed as the sum of the required data rate and the channel gain over all the sub-carriers.

According to Equation (6), the MS having a lower average channel gain and a higher required data rate has a higher MS priority value $r(k)$. The second embodiment determines a resource allocation priority of each MS based on the calculated MS priority value. In addition, the second embodiment allocates resources for each MS in order of the determined resource allocation priority. The resource allocation for each MS is performed based on a channel gain given for each sub-carrier. That is, the second embodiment allocates as many sub-carriers as the sub-carriers required by the MS in descending order of a sub-carrier having a high channel gain. If the desired sub-carriers have already been allocated to another MS, the second embodiment allocates sub-carriers having the second highest channel gain.

As described above, the resource allocation method proposed by the second embodiment of the present invention is divided into a process of ordering a resource allocation order depending on the MS priority value, and a process of allocating sub-carriers for each MS in the resource allocation order.

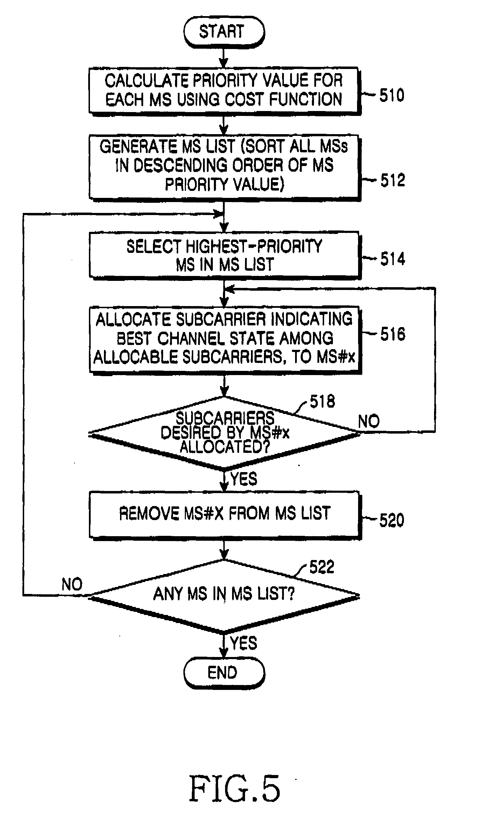

FIG. 5 is a flowchart illustrating a resource allocation process according to the second embodiment of the present invention. It is assumed that the resource allocation process shown in FIG. 5 is performed after a BS completes collection of required data rate information from each MS.

Referring to FIG. 5, in step 510, a BS calculates an MS priority value for each MS using a cost function. In step 512, the BS generates an MS list by ordering all MSs in descending order of the MS priority value. In step 514, the BS selects an MS having the highest MS priority value among the MSs in the MS list. It is assumed herein that the MS having the highest MS priority value is an $x^{th}$ MS.

In step 516, the BS allocates the sub-carrier indicating the best channel state among its allocable sub-carriers, to the $x^{th}$ MS. In step 518, the BS determines whether as many sub-carriers as the sub-carriers desired by the $x^{th}$ MS have already been allocated. If it is determined that as many sub-carriers as the sub-carriers desired by the $x^{th}$ MS have not yet been allocated, the BS returns to step 516.

However, if it is determined in step 518 that as many sub-carriers as the sub-carriers desired by the $x^{th}$ MS have already been allocated, the BS excludes the $x^{th}$ MS from the MS list for the $n^{th}$ sub-carrier in step 520. Thereafter, in step 522, the BS determines whether there is any MS in the MS list. If it is determined that there is any MS in the MS list, the BS returns to step 514. However, if it is determined in step 522 that there is no MS in the MS list, the BS ends the resource allocation process.

In the foregoing detailed description, it is assumed that a unique priority is assigned to each MS. However, the second embodiment can also be implemented by assigning at least one priority threshold, classifying a resource allocation order into a plurality of sub-classes, and allocating resources for each sub-class.

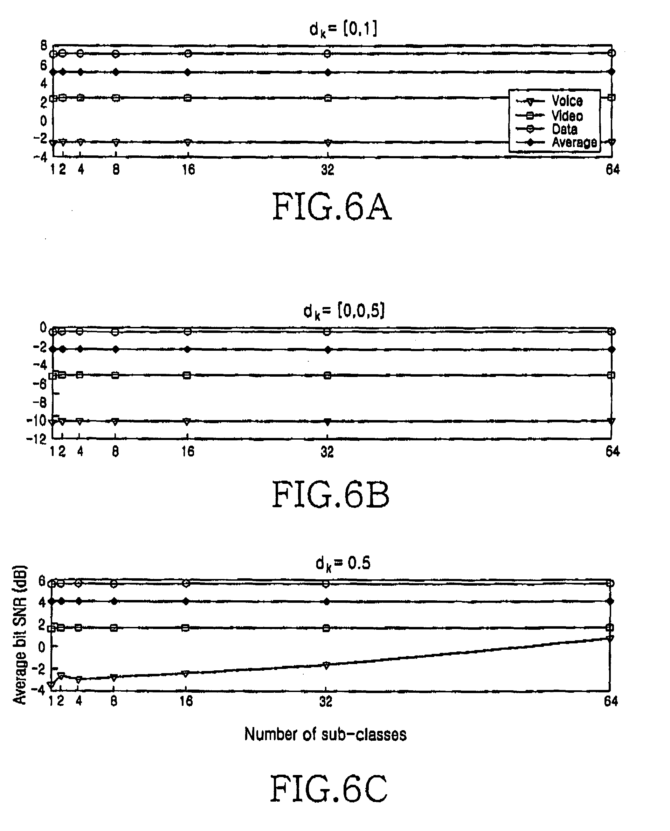

FIGs. 6A to 6C are diagrams illustrating simulation result data obtained through performance analysis according to the number of sub-classes. It is assumed in FIG. 6A that MSs are uniformly distributed over the entire cell. It is assumed in FIG. 6B that MSs are distributed only in a particular area of the cell. It is assumed in FIG. 6C that there is no pass loss difference between MSs. In addition, it is assumed that a ratio of voice service: video service: data service is 37:23:4 in the mobile communication system using 64 MSs and 512 sub-carriers.

It can be noted from FIGs. 6A to 6C that the resource allocation method proposed by the present invention shows constant performance regardless of the number of sub-classes. In the cellular mobile communication system, it is common that MSs are uniformly allocated in the cell. From this point of view, it can be noted from FIG. 6A that it is possible to obtain a constant Signal-to-Noise Ratio (SNR) regardless of the number of priority thresholds used.

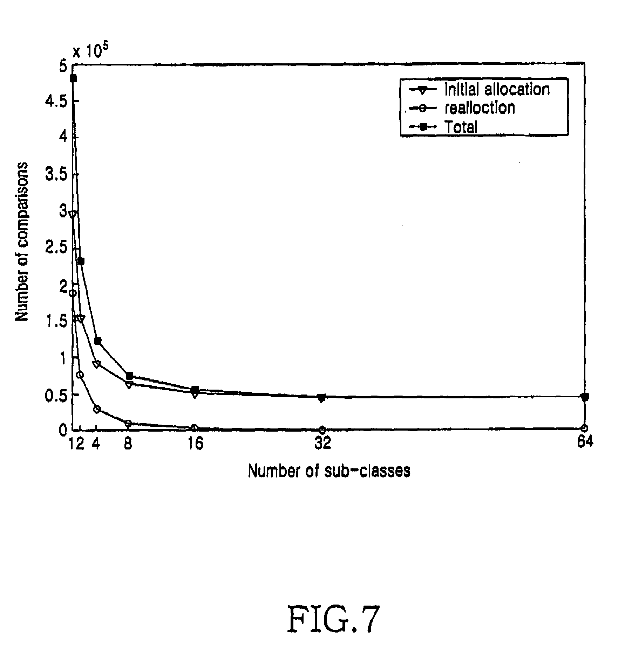

FIG. 7 is a diagram illustrating a correlation between the number of sub-classes and the complexity. For the simulation of FIG. 7, it is assumed that a ratio of voice service: video service: data service is 37:23:4 in the mobile communication system using 64 MSs and 512 sub-carriers.

It can be noted from FIG. 7 that an increase in the number of sub-classes reduces the complexity. However, if the number of sub-classes exceeds a particular value K, the complexity remains constant. Therefore, in the second embodiment of the present invention, it is preferable to determine the number of sub-classes as K, taking the performance and complexity into consideration.

As described above, the second embodiment of the present invention proposes the method for allocating resources for each MS using 1-dimensional calculation. Therefore, the resource allocation method proposed by the second embodiment of the present invention can noticeably reduce the complexity, compared with the existing cost function-based resource allocation method.

As can be understood from the foregoing description, the present invention allocates resources taking into account a relative channel gain difference between MSs, thereby contributing to optimized resource allocation and minimized transmission power consumption. In addition, the present invention allocates resources for each MS using 1-dimensional calculation. Therefore, the proposed resource allocation method can noticeably reduce the system complexity, compared with the existing cost function-based resource allocation method.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. A method for allocating resources in a base station (BS) of a mobile communication system, the method comprising:

   calculating a priority value of each sub-carrier for each mobile station (MS) according to a data rate required by each MS and an average channel gain for each MS, the priority value based on an average channel gain between MSs; and
   allocating the sub-carriers to a corresponding MS according to the priority value calculated for each sub-carrier for each MS.

2. The method of claim 1, wherein the priority value is calculated by

$$c(k,n) = |H(k,n)|R_k / \{\sum_{n=0}^{N-1}|H(k,n)|\}^2$$

   where $k$ denotes an index of an MS, $n$ denotes an index of a sub-carrier, $c(k,n)$ denotes a priority value for an $n^{th}$ sub-carrier of a $k^{th}$ MS, $|H(k,n)|$ denotes a channel gain at the $n^{th}$ sub-carrier of the $k^{th}$ MS, and $R_k$ denotes a data rate required by the $k^{th}$ MS.

3. The method of claim 1, wherein the priority value is calculated by

$$c(k,n) = |H(k,n)|R_k / \sum_{n=0}^{N-1}|H(k,n)|^2$$

where $k$ denotes an index of an MS, $n$ denotes an index of a sub-carrier, $c(k,n)$ denotes a priority value for an $n^{th}$ sub-carrier of a $k^{th}$ MS, $|H(k,n)|$ denotes a channel gain at the $n^{th}$ sub-carrier of the $k^{th}$ MS, and $R_k$ denotes a data rate required by the $k^{th}$ MS.

**4.** The method of claim 1, wherein an MS having the calculated highest priority value is an MS selected by a scheduler included in the BS.

**5.** A method for allocating resources in a base station (BS) of a mobile communication system, the method comprising:

calculating for each mobile station (MS), an MS priority value according to a data rate required by each MS and a channel gain for each MS;
ordering the MSs according to the MS priority value; and
allocating sub-carriers for each MS according to the ordering result.

**6.** The method of claim 5, wherein the MS priority value is calculated by

$$r(k) = R_k / \sum_{n=0}^{N-1} |H(k,n)|$$

where $k$ denotes an index of an MS, $n$ denotes an index of a sub-carrier, $r(k)$ denotes an MS priority value assigned to a $k^{th}$ MS, $|H(k,n)|$ denotes a channel gain at the $n^{th}$ sub-carrier of the $k^{th}$ MS, and $R_k$ denotes a data rate required by the $k^{th}$ MS.

**7.** The method of claim 6, wherein the step of ordering the MSs according to the MS priority value comprises ordering the MS priority value in descending order, and preferentially allocating sub-carriers for an MS having the highest MS priority value.

**8.** An apparatus for allocating resources in a base station (BS) of a mobile communication system, the apparatus comprising:

a sub-carrier allocator for calculating a priority value of each sub-carrier for each mobile station (MS) according to a data rate required by each MS and an average channel gain for each MS, the priority value based on an average channel gain between MSs, and allocating the sub-carriers to a MS according to the priority value calculated for each sub-carrier for each MS.

**9.** The apparatus of claim 8, wherein the priority value is calculated by

$$c(k,n) = |H(k,n)| R_k / \{\sum_{n=0}^{N-1} |H(k,n)|\}^2$$

where $k$ denotes an index of an MS, $n$ denotes an index of a sub-carrier, $c(k,n)$ denotes a priority value for an $n^{th}$ sub-carrier of a $k^{th}$ MS, $|H(k,n)|$ denotes a channel gain at the $n^{th}$ sub-carrier of the $k^{th}$ MS, and $R_k$ denotes a data rate required by the $k^{th}$ MS.

**10.** The apparatus of claim 8, wherein the priority value is calculated by

$$c(k,n) = |H(k,n)| R_k / \sum_{n=0}^{N-1} |H(k,n)|^2$$

where $k$ denotes an index of an MS, $n$ denotes an index of a sub-carrier, $c(k,n)$ denotes a priority value for an $n^{th}$ sub-carrier of a $k^{th}$ MS, $|H(k,n)|$ denotes a channel gain at the $n^{th}$ sub-carrier of the $k^{th}$ MS, and $R_k$ denotes a data

rate required by the $k^{th}$ MS.

**11.** The apparatus of claim 8, wherein an MS having the calculated highest priority value is an MS selected by a scheduler included in the BS.

**12.** An apparatus for allocating resources in a base station (BS) of a mobile communication system, the apparatus comprising:

a sub-carrier allocator for calculating for each mobile station (MS), an MS priority value according to a data rate required by each MS and a channel gain for each MS, ordering the MSs according to the MS priority value, and allocating sub-carriers for each MS according to the ordering result.

**13.** The apparatus of claim 12, wherein the MS priority value is calculated by

$$r(k) = R_k / \sum_{n=0}^{N-1} |H(k,n)|$$

where $k$ denotes an index of an MS, $n$ denotes an index of a sub-carrier, $r(k)$ denotes an MS priority value assigned to a $k^{th}$ MS, $|H(k,n)|$ denotes a channel gain at the $n^{th}$ sub-carrier of the $k^{th}$ MS, and $R_k$ denotes a data rate required by the $k^{th}$ MS.

**14.** The apparatus of claim 13, wherein the sub-carrier allocator orders the MS priority value in descending order, and preferentially allocates sub-carriers for an MS having the highest MS priority value.

FIG.1

EP 1 760 966 A2

FIG.2

12

FIG.3

```
                    ┌─────────┐
                    │  START  │
                    └────┬────┘
                         │
          ┌──────────────▼──────────────┐
          │   CALCULATE CHANNEL GAIN OF  │
          │ EACH INDIVIDUAL SUBCARRIER FOR │──── 410
          │  EACH MS USING COST FUNCTION │
          └──────────────┬──────────────┘
                         │
          ┌──────────────▼──────────────┐
          │          k ← 0              │──── 412
          │          n → 0              │
          └──────────────┬──────────────┘
                         │
          ┌──────────────▼──────────────┐
          │   SELECT HIGHEST-PRIORITY MS │──── 414
          │     FOR SUBCARRIER #n        │
          └──────────────┬──────────────┘
                         │
                      ╱──▼──╲   416
                   ╱ SUBCARRIERS ╲     YES
                  ╱ DESIRED BY MS#x ╲──────────┐
                  ╲  ALLOCATED?    ╱            │
                   ╲──────┬──────╱              │
                          │NO                   │
                          │              ┌──────▼──────┐ 418
          ┌───────────────▼────────────┐ │ EXCLUDE MS#x FROM │
          │ ALLOCATE SUBCARRIER #n TO MS#x│─420 │ ALLOCATION LIST FOR │
          └───────────────┬────────────┘ │  SUBCARRIER #n │
                          │              └──────┬──────┘
          ┌───────────────▼────────────┐        │
          │          n ← n+1           │──422   │
          └───────────────┬────────────┘        │
                          │◄─────────────────────┘
                       ╱──▼──╲   424
              YES    ╱         ╲
          ┌────────╱  n < N ?   ╲
          │        ╲           ╱
          │         ╲──────┬──╱
          │                │NO
          │           ┌────▼────┐
          │           │   END   │
          │           └─────────┘
          └──────────────────────────────┘ (loop back)
```

# FIG.4

START

CALCULATE PRIORITY VALUE FOR
EACH MS USING COST FUNCTION — 510

GENERATE MS LIST (SORT ALL MSs
IN DESCENDING ORDER OF MS
PRIORITY VALUE) — 512

SELECT HIGHEST-PRIORITY
MS IN MS LIST — 514

ALLOCATE SUBCARRIER INDICATING
BEST CHANNEL STATE AMONG
ALLOCABLE SUBCARRIERS, TO MS#x — 516

518
SUBCARRIERS
DESIRED BY MS#x
ALLOCATED? — NO

YES

REMOVE MS#X FROM MS LIST — 520

522
NO — ANY MS IN MS LIST?

YES

END

FIG.5

15

FIG.6A

FIG.6B

FIG.6C

FIG.7